# EUROPEAN PATENT SPECIFICATION

(11) **EP 2 570 757 B1**
(45) Date of publication and mention of the grant of the patent: **23.08.2017**
(21) Application number: 12184226.4
(22) Date of filing: 13.09.2012
(51) Int. Cl.: F25D 29/00

(54) **Indicating device and refrigerator having the same**
Anzeigevorrichtung und Kühlschrank damit
Dispositif d'indication et réfrigérateur doté de celui-ci

(30) Priority: 19.09.2011 KR 20110094307
(43) Date of publication of application: 20.03.2013
(73) Proprietor: Samsung Electronics Co., Ltd., Suwon-si, Gyeonggi-do, 443-742 (KR)
(72) Inventor: Lee, Myung Ju, Gwangju (KR); Yun, Young, Gwangju (KR); Kang, Sung Cheol, Gwangju-City (KR)
(74) Representative: Grünecker Patent- und Rechtsanwälte PartG mbB

(56) References cited:
- EP-A1- 1 624 724
- EP-A1- 1 741 367
- EP-A2- 1 624 267
- JP-B2- 3 917 413
- KR-B1- 100 878 822
- US-A- 4 697 429
- US-A1- 2002 116 936
- US-A1- 2004 100 380
- US-A1- 2005 258 961
- US-A1- 2009 096 617

## Description

### BACKGROUND

### 1. Field

Embodiments of the present invention relate to a refrigerator having an indicating device to guide setting of a desired storage condition for food to be stored in accordance with the kind and state of the food.

### 2. Description of the Related Art

Generally, refrigerators include a storage chamber and a cooling device to supply cold air to the storage chamber, to store food in the storage chamber in a fresh state. In such a refrigerator, the storage chamber thereof is maintained at a certain storage temperature, to keep food therein in a fresh state.

On the other hand, there is a refrigerator, the storage temperature of which is varied in accordance with the state of food, for example, the salinity or acidity of the food, in order to store the food in a more fresh state for a prolonged period of time. Examples of such a refrigerator are disclosed in Korean Unexamined Patent Publication No. 2001-0018642, Korean Unexamined Patent Publication No. 2002-0029513 and Korean Registered Patent Publication No. 10-0878822.

In the refrigerators disclosed in the above publications, a measurement terminal is attached to a container to store food, in order to measure the state of the food. However, the measurement terminal is kept in continuous contact with the food.

Furthermore, data about the food state measured through the measurement terminal or data about the storage temperature determined based on the state data is not provided to the user. For this reason, the user may doubt whether the storage temperature is reliable.

JP 3 917413 B2 discloses a refrigerator with a body having at least one storage chamber and a cooling room with a door. Inside the cooling room, a cooling device is provided which is operated by a corresponding microprocessor or management tool to change the temperature inside the cooling room. There is also a temperature sensor which can be fixed to a container in which food may be arranged. The corresponding temperature sensor is portable and is a device separate from the body of the corresponding refrigerator. A temperature sensor is directly introduced into the food to measure corresponding core and skin temperatures.

US 2009/096617 A1 discloses a separate device as an indicating device which may be assigned to food in different ways. The detection device may be placed underneath a food item, in between layers of the food item or may be inserted in a cavity of the food item. The corresponding food item is arranged in a food service equipment for displaying, serving, and/ro transporting the food item.

### SUMMARY

It is an object of the present disclosure to provide a refrigerator in which a measurement terminal to measure the state of food stored in a storage chamber can come into contact with the food, only when contact is needed.

Another aspect of the present disclosure is to provide a refrigerator capable of enabling the user to directly measure the state of food stored in the refrigerator, to enable the refrigerator to determine a desired storage condition of the food, based on the result of the measurement, thereby ensuring reliability of the determined storage condition.

Additional aspects will be set forth in part in the description which follows and, in part, will be obvious from the description, or may be learned by practice of the invention.

The object is solved by the features of the independent claims. Advantageous embodiments are disclosed by the subclaims.

The food state data may include at least one of a salinity of the food, an acidity of the food, a temperature of the food, and a number of bacteria present in the food.

The measurement unit of the indicating device may include at least one of a salinity measurer, an acidity measurer, a temperature measurer, and a bacteria number measurer, to obtain the food state data.

The determination unit may include a memory in which data about various food storage conditions according to data about various food states is pre-stored.

The input unit may be able to manually receive the food state data.

The input unit may be able to receive the food state data from the indicating device through wired or wireless communication.

The indicating device may further include a communication unit for the wired or wireless communication.

The input unit and the communication unit of the indicating device may include connection terminals to come into contact with each other for electrical connection thereof, respectively.

The refrigerator may further include a kind input unit to receive data about the kind of the food, The determination unit may determine the food storage condition, based on the food state data input through the input unit and the food kind data input through the kind input unit.

The kind input unit may selectively receive the kind input data.

The determination unit may include a memory in which data about various food storage conditions according to data about various food states and data about various food kinds is pre-stored.

The food storage condition may include a food storage temperature.

The indicating device may further include a kind input unit to receive data about a kind of the food. The determination unit of the indicating device may determine the food storage condition, based on the food state data obtained through the measurement unit of the indicating device and the food kind data input through the kind input unit of the indicating device.

The kind input unit of the indicating device may selectively receive the kind input data.

The determination unit of the indicating device may include a memory in which data about various food storage conditions according to data about various food states and data about various food kinds is pre-stored.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view illustrating outer appearances of a refrigerator according to an exemplary embodiment of the present invention and an indicating device provided at the refrigerator in accordance with an exemplary embodiment of the present invention;
FIG. 2 is an enlarged view illustrating an indicating device of the refrigerator according to another embodiment of the present invention and a pocket for the indicating device;
FIG. 3 is a block diagram for explaining a method for controlling the refrigerator according to the embodiment of FIG. 1;
FIG. 4 is a block diagram for explaining a method for controlling the refrigerator according to the embodiment of FIG. 2;
FIG. 5 is a perspective view illustrating outer appearances of a refrigerator according to another embodiment of the present invention and an indicating device thereof;
FIG. 6 is a block diagram for explaining a method for controlling the refrigerator according to the embodiment of FIG. 5; and
FIG. 7 is a block diagram for explaining a method for controlling the refrigerator according to another embodiment of the present invention.

### DETAILED DESCRIPTION

Hereinafter, embodiments of the present invention will be described with reference to the accompanying drawings.

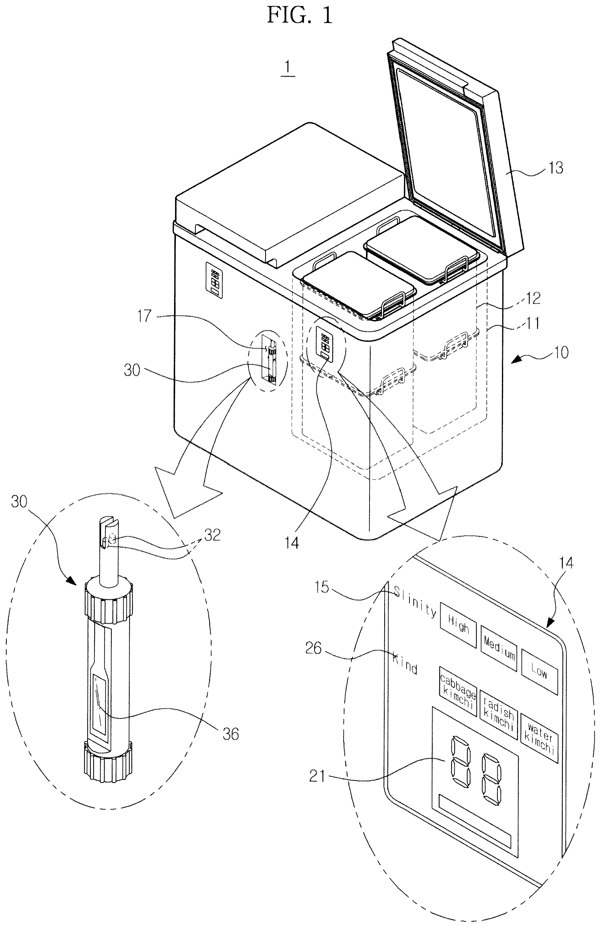

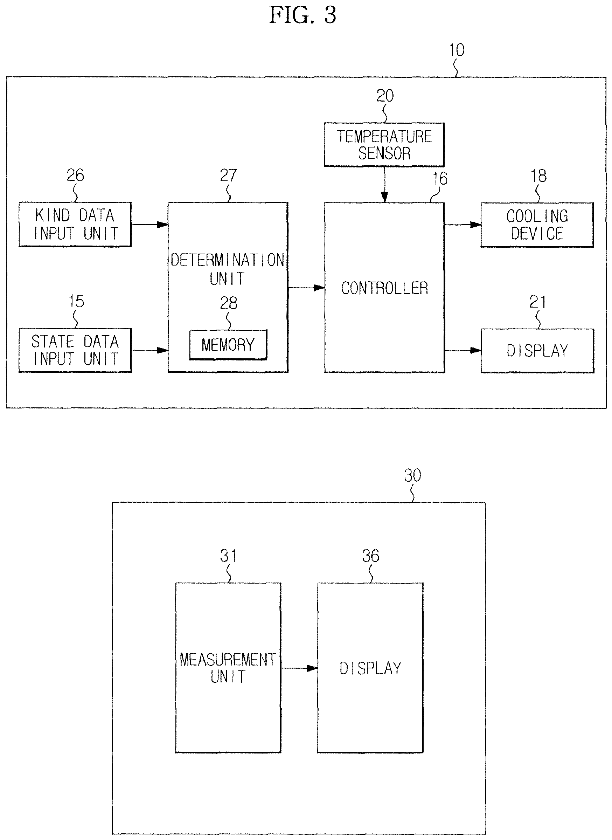

FIG. 1 is a perspective view illustrating outer appearances of a refrigerator according to an exemplary embodiment of the present invention and an indicating device provided at the refrigerator in accordance with an exemplary embodiment of the present invention. FIG. 3 is a block diagram for explaining a method for controlling the refrigerator according to the illustrated embodiment of the present invention.

Referring to FIGS. 1 and 3, the refrigerator according to the illustrated embodiment of the present invention, which is designated by reference numeral "1 ", includes a body 10 having a storage chamber 11, and an indicating device 30 provided separately from the body 10.

The storage chamber 11 is opened at a top side thereof to receive storage containers 12 to store food. The opened top side of the storage chamber 11 may be closed by a door 13 pivotally coupled to the body 10 by a hinge. The body 10 may have at least one storage chamber 11. However, the following description will be given in conjunction with the case in which one storage chamber 11 is provided, for simplicity of description. In the refrigerator 1 according to the illustrated embodiment of the present invention, it may be possible to maximally reduce outward discharge of cold air from the storage chamber 11 occurring during the procedure of opening and closing the door 13 in that the cold air in the storage chamber 11 sinks downwardly.

Of course, the technical idea of the present disclosure may also be applied to an upright refrigerator in which a storage chamber is opened at a front side thereof, without being limited to a refrigerator in which a storage chamber is opened at a top side thereof, as in the above-described refrigerator. The technical idea of the present disclosure may also be applied to an appliance which is used to store consumable goods.

The storage containers 12 to store food may be received in the storage chamber 11. For example, food such as kimchi, vegetables or fish may be stored in each storage container 12. At least one storage container 12 may be received in the storage chamber 11. The storage containers 12 may have the same size or different sizes.

Each storage container 12 is opened at a top side thereof to receive food, and may include a lid to cover the opened top side. Two or more storage containers 12 may be stacked in one storage chamber 11.

The refrigerator 1 may include a cooling device 18 (FIG. 3) to supply cold air to the storage chamber 11. The cooling device may include a compressor, a condenser, an evaporator, an expansion valve, a blowing fan, a cold air duct, and a damper. The refrigerator 1 may also include a heater (not shown) to apply heat to food stored in the storage chamber 11, and thus to mature the food, and a temperature sensor 20 (FIG. 3) to sense the temperature of the storage chamber 11.

Meanwhile, the refrigerator 1 may change a food storage condition including storage temperature, etc. in accordance with the kind and state of food stored in the storage chamber 11. As shown in FIG. 3, the body 10 may include a kind data input unit 26 to receive data about the kind of food, a state data input unit 15 to receive data about the state of food, a determination unit 27 to determine a desired food storage condition, and a controller 16 to control driving of the cooling device 18 in accordance with the determined food storage condition.

The kind data input unit 26 directly receives the food kind data from the user. In this case, the kind of food may be divided, for example, into kimchi, vegetables, fish, etc. Each divided food kind may be sub-divided in accordance with the materials of food and the amounts of spices added to food. For example, kimchi may be sub-divided into cabbage kimchi, radish kimchi, water kimchi, etc.

The kind data input unit 26 may include a plurality of selection buttons respectively corresponding to given food kinds, to enable the user to input a selected one of the given food kinds. An example of the selection buttons of the kind data input unit 26 is illustrated in FIG. 1. In the example of FIG. 1, selection buttons to enable selection of cabbage kimchi, radish kimchi, and water kimchi are provided. Of course, this is merely an example. An additional selection button to select another kind of food may be provided. Also, at least one of the selection buttons to select cabbage kimchi, radish kimchi, and water kimchi may be dispensed with.

The state data input unit 15 is adapted to receive state data of food. The food state data may include at least one of the salinity, acidity, temperature of food, and the number of bacteria present in food.

The state data input unit 15 may include a plurality of selection buttons for each of the food state items. An example of the selection buttons of the state data input unit 15 is illustrated in FIG. 1.

FIG. 1 illustrates selection buttons for one of the food state items, for example, salinity. The selection buttons shown in FIG. 1 correspond to different salinity levels, namely, high salinity, medium salinity, and low salinity, respectively.

The user may directly input food state data in a manual manner through one of the selection buttons. Of course, the indicating device 30, which is included in a refrigerator according to another embodiment of the present invention, may be provided with an indicating device communication unit 38 to communicate with the state data input unit 15, and thus to transmit food state data in a wired or wireless manner.

The determination unit 27 determines a desired food storage condition such as a desired food storage temperature, based on the kind data of food input through the kind data input unit 26 and the state data of food input through the state data input unit 15. The food storage temperature means a temperature capable of allowing corresponding food to be stored in a fresh state for a prolonged period of time without freezing.

The food storage temperature may be varied in accordance with the state of food and the kind of food. For example, when the salinity of food is high, the freezing temperature of the food is low. On the other hand, when the salinity of food is low, the freezing temperature of the food is high. Accordingly, when the salinity of food is high, the storage temperature of the food is low, whereas, when the salinity of food is low, the storage temperature of the food is high.

The freezing temperature may be varied in accordance with the kind of food, even when the salinity of food is constant. For example, cabbage kimchi exhibits a lower freezing temperature than radish kimchi, and radish kimchi exhibits a lower freezing temperature than water kimchi.

Accordingly, even when cabbage kimchi, radish kimchi, and water kimchi have the same salinity, the storage temperature for the cabbage kimchi is lower than that of the radish kimchi, and the storage temperature for the radish kimchi is lower than that of water kimchi.

The food storage condition such as food storage temperature may be experimentally determined, taking into consideration both food kind and food state. Accordingly, the food storage condition may be determined in various manners. For example, the food storage condition such as food storage temperature may be scaled by a plurality of notches respectively exhibiting different ranges, for convenience. For example, the food storage temperature may be scaled by a plurality of notches corresponding to "high", "medium", and "low" temperature ranges.

The determination unit 27 includes a memory 28 in which various food storage conditions according to food states and food kinds set in the above-described manner are pre-stored. The determination unit 27 may search the memory 28, to determine a food storage condition according to the food kind data input through the kind data input unit 26 and the food state data input through the state data input unit 15.

The controller 16 controls driving of the cooling device 18 in accordance with the food storage condition determined through the determination unit 27. Furthermore, the controller 16 may control driving of the heater (not shown), if necessary. The controller 16 receives data about the current temperature of the storage chamber 11 from the temperature sensor 20, which measures the temperature of the storage chamber 11. The controller 16 then compares the current temperature with a food storage temperature determined through the determination unit 27, to drive the cooling device 18 or to stop driving of the cooling device 18.

The controller 16 may control a display 21, to display the food kind data input through the kind data input unit 26, the food state data input through the state data input unit 15, food storage condition data determined through the determination unit 27, and other data. Meanwhile, the controller 16 may be configured to include the determination unit 27.

The indicating device 30 is adapted to measure the state of food stored in the storage container 12, and thus to obtain food state data. The indicating device 20 is provided to be portable, separately from the body 10 and storage container 12.

As shown in FIG. 3, the indicating device 30 may include a measurement unit 31 to measure the state of food, and thus to obtain data about the measured food state, and a display 36 to display the food state data obtained from the measurement unit 31.

The measurement unit 31 of the indicating device 30 may include at least one of measurers to measure various states of food, for example, salinity, acidity, temperature, and bacteria number present in food.

Each measurer may include a measurement terminal to measure a state of food. FIG. 1 illustrates a salinity measurement terminal which includes, for example, a pair of electrodes 32. The salinity of food may be measured using a principle that electrical conductivity is varied in accordance with the ion concentration of food.

That is, the salinity of food may be measured or calculated by applying a voltage to the salinity measurement electrodes 32 under the condition in which the salinity measurement electrodes 32 contact food, and then measuring the amount of current flowing through the salinity measurement electrodes 32.

The display 36 of the indicating device 30 displays data about various states of food measured by the measurement unit 31. The user may identify the state data displayed through the display 36. The user may also input the identified state data to the state data input unit 15.

In accordance with the above-described configuration, the refrigerator may vary the food storage condition in accordance with the state of food and the kind of food. Thus, it may be possible to store food in a fresher state for a prolonged period of time. Also, since the indicating device is separate from the body 10, it may contact food only when contact is required.

In addition, there may be a procedure in which the user directly measures the state of food using the indicating device 30, and thus to obtain data about the measured food state. Accordingly, the food storage condition of the refrigerator 1 may be more reliable.

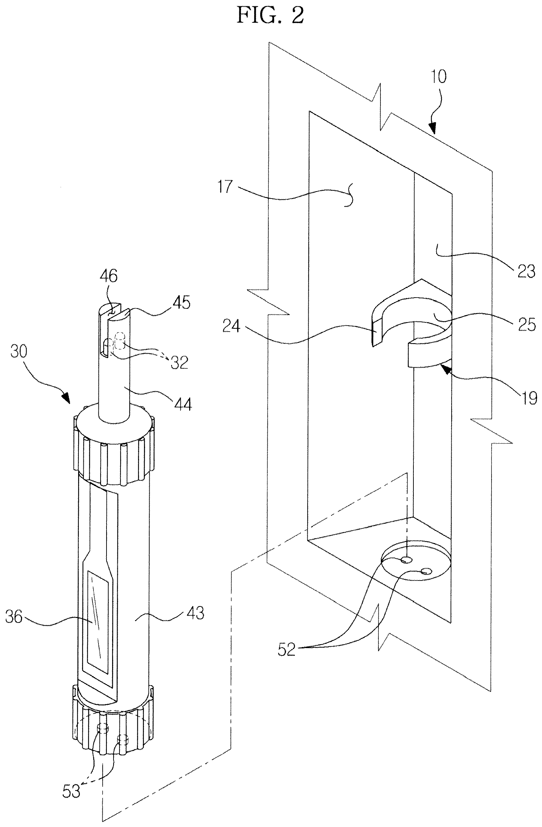

FIG. 2 is an enlarged view illustrating an indicating device of the refrigerator according to another embodiment of the present invention and a pocket for the indicating device. The indicating device 30 according to the embodiment of FIG. 1 has largely the same configuration as the indicating device 30 according to the embodiment of FIG. 2. Accordingly, the refrigerator 1 according to the embodiment of FIG. 1 and the indicating device thereof will be further described with reference to FIGS. 1 and 2.

The indicating device 30 has an outer appearance having an elongated cylindrical shape. The indicating device 30 may include a body 43 and a probe 44. The probe 44 may include the measurement electrodes 32. The body 43 may include the display 36.

A pair of spaced protrusions 45 is protruded from an end of the probe 44. An opening 46 is defined between the protrusions 45. The measurement electrodes 32 may be arranged such that a portion of each measurement electrode 32 is exposed to the opening 46. In accordance with such a structure, it may be possible to prevent the measurement electrodes 32 from excessively contacting food during measurement of food state. Thus, it may be possible to prevent the measurement electrodes 32 from being damaged.

A pocket 17 may be provided at an outer wall of the body 10 to hold the indicating device 30. The pocket 17 may have a recess structure formed by an inwardly recessed portion of the outer wall of the body 10.

Although the pocket 17 is provided at the outer wall of the body 10 in the form of a recess, this is merely an example. The pocket 17 may have various structures. For example, the pocket 17 may have a structure protruded from the outer wall of the body 10 or may have a drawer structure slidable into the body 10.

As shown in FIG. 2, a holder 19 may be provided at the pocket 17 to hold the indicating device 30. The holder 19 may be made of an elastic material, and may be coupled to an inner wall 23 of the pocket 17.

When the indicating device 30 is pressed against an inner surface 25 of the holder 19, an entrance 24 of the holder 19 is laterally widened to allow the indicating device 30 to be inserted into the holder 19. Thus, the indicating device 30 is firmly held by an elastic force of the holder 19. Of course, the holder 19 may also have various shapes and structures different from those of the above-described case, so long as the holder 19 satisfies the purpose of holding the indicating device 30 on the body 10.

Meanwhile, the body 10 may be provided, at the outer wall thereof, with an operating unit 40 which includes the selection buttons of the kind data input unit 26, the selection buttons of the state data input unit 15, and a display pane of the display 21.

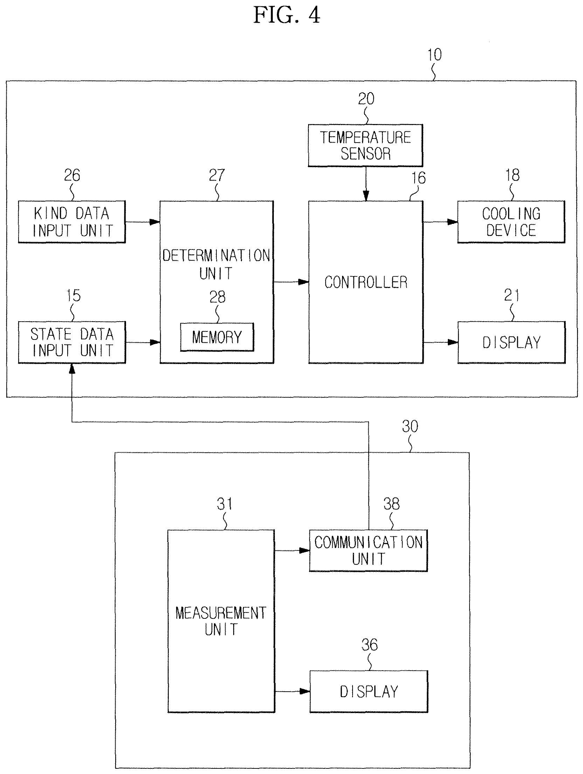

FIG. 4 is a block diagram for explaining a method for controlling the refrigerator according to the embodiment of FIG. 2. Hereinafter, the refrigerator according to the embodiment of FIG. 2 and the control method thereof will be described with reference to FIGS. 2 and 4. The same constituent elements as those of the previous embodiment will be designated by the same reference numerals as those of the previous embodiment, and no description thereof will be given.

The indicating device 30 may include a measurement unit 31 to measure the state of food, and thus to obtain data about the measured food state, a display 36 to display the food state data obtained from the measurement unit 31, and a communication unit 38 to transmit the food state data obtained from the measurement unit 31 to the state data input unit 15 of the body 10 in a wired or wireless manner.

As shown in FIG. 2, the communication unit 38 is electrically connected to the state data input unit 15 as transmission terminals 53 of the communication unit 38 contact reception terminals 52 of the state data input unit 15. In this state, the communication unit 38 may communicate with the state data input unit 15 in a wired manner.

Also, the communication unit 38 may be connected with the state data input unit 15 in a wireless manner through a local area network such as Bluetooth or infrared communication such as radio frequency identification (RFID) or wireless internet such as Wi-Fi.

Accordingly, it may be possible to transmit the food state data displayed on the display 36 of the indicating device 30 in a wired or wireless manner without direct input of the food state data to the state data input unit 15 of the body 10 in a manual manner by the user. Thus, the display 36 of the indicating device 30 may be dispensed with.

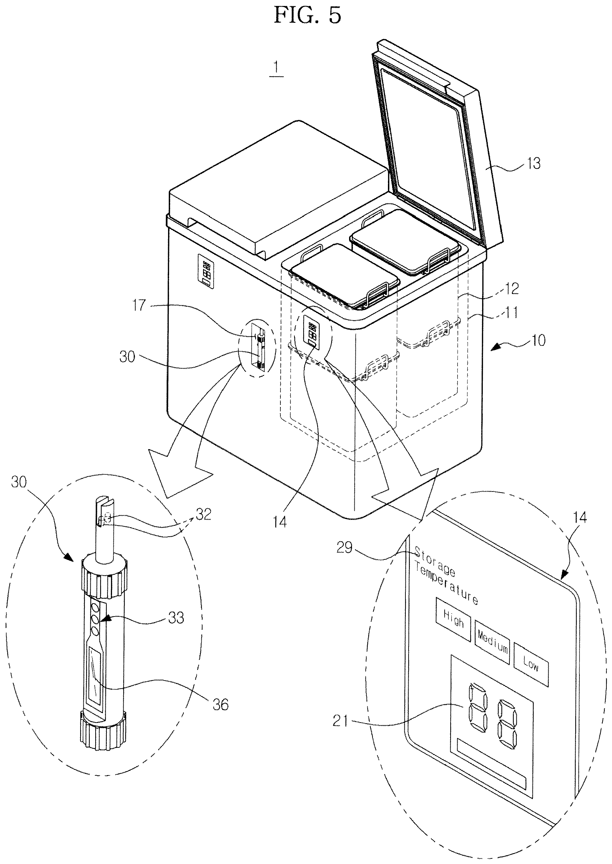

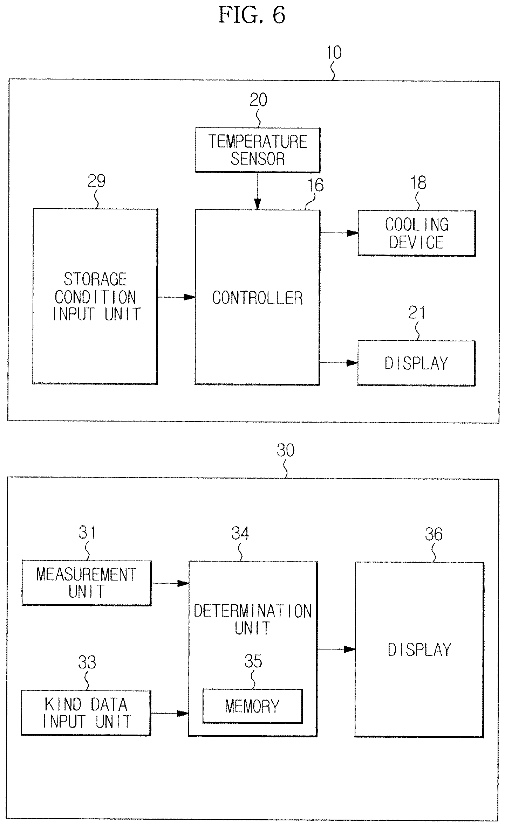

FIG. 5 is a perspective view illustrating outer appearances of a refrigerator according to another embodiment of the present invention and an indicating device thereof. FIG. 6 is a block diagram for explaining a method for controlling the refrigerator according to the embodiment of FIG. 5.

Hereinafter, the refrigerator according to the embodiment of FIG. 5 and the control method thereof will be described with reference to FIGS. 5 and 6. The same constituent elements as those of the previous embodiments will be designated by the same reference numerals as those of the previous embodiments, and no description thereof will be given.

The body 10 of the refrigerator 1 may include a storage condition input unit 29 to input a food storage condition such as a storage temperature, etc. according to the kind and state of food, and a controller 16 to control driving of the cooling device 18 in accordance with the food storage condition input through the storage condition input unit 29.

The storage condition input unit 29 may include a plurality of selection buttons respectively corresponding to different storage temperatures. FIG. 5 illustrates selection buttons respectively corresponding to high, medium, and low storage temperature ranges.

The indicating device 30 may include a measurement unit 31 to measure various states of food, and thus to obtain data about the measured food states, a kind data input unit 33 to directly receive data about the kind of food from the user, a determination unit 34 to determine a desired food storage condition based on the food state data obtained by the measurement unit 31 and the food kind data input through the kind data input unit 33, and a display 36 to display the food storage condition determined through the determination unit 34.

The determination unit 34 includes a memory 35 in which various food storage conditions according to various food states and various food kinds are pre-stored. Thus, the determination unit 34 may search the memory 35, to determine a food storage condition according to the food state data and food kind data.

In accordance with the above-described configuration, the indicating device 30 of FIGS. 5 and 6 may obtain data about various states of food and receive data about the kind of food. Furthermore, it may be possible to determine a desired food storage condition based on the food state data and food kind data.

Since the determined food storage condition is displayed through the display 36, the user may directly input the displayed food storage condition to the storage condition input unit 29 of the body 10.

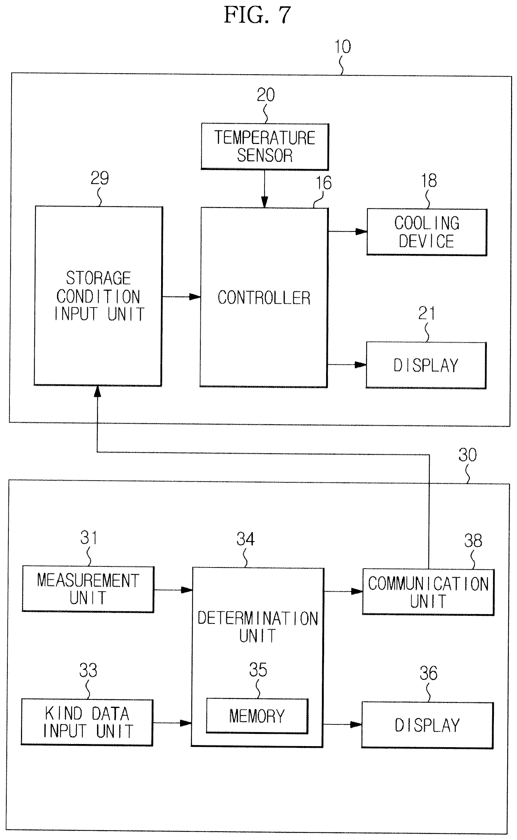

FIG. 7 is a block diagram for explaining a method for controlling the refrigerator according to another embodiment of the present invention. Hereinafter, the refrigerator according to the embodiment of FIG. 7 and the control method thereof will be described with reference to FIG. 7. The same constituent elements as those of the previous embodiments will be designated by the same reference numerals as those of the previous embodiments, and no description thereof will be given.

The indicating device 30 may include a measurement unit 31, a kind data input unit 33, a determination unit 34, a display 36, and a communication unit 38.

The communication unit 38 may transmit, to the storage condition input unit 29 of the body 10, data about a food storage condition, such as food storage temperature, determined by the determination unit 34. The communication unit 38 may be connected to the storage condition input unit 29 through wired or wireless communication.

In accordance with the above-described configuration, the user may measure the state of food, using the indicating device 30, to obtain food state data. When the user then inputs data about the kind of food to the indicating device 30, the indicating device 30 determines a desired food storage condition. Data about the determined food storage condition may be transmitted to the body 10 through wired or wireless communication.

Meanwhile, in the refrigerator according to each of the above-described embodiments, the storage condition of food is determined, taking into consideration both the kind and stage of food. However, where the kind of food to be stored is previously determined, it may be possible to determine the food storage condition, taking into consideration only the state of food.

In this case, the kind data input unit 26 of the body 10 to receive data about the kind of food and the kind data input unit 33 of the indicating device 30 may be dispensed with. Also, the determination unit 27 of the body 10 and the determination unit 34 of the indicating device 30 may be configured to determine a desired food storage condition, only based on data about the state of food.

In accordance with each aspect, the indicating device, which is provided separately from the body, contacts food to measure the state of the food, only when measurement is required. Accordingly, it may be possible to solve a hygiene problem occurring when measurement terminals are in contact with food for a long period of time.

Also, it may be possible to measure the store of food stored in each storage container, using a single indicating device, and thus to reduce cost, as compared to the conventional refrigerator in which measurement terminals are provided at each storage container.

In addition, the user may directly measure the state of food stored in the refrigerator, to enable the refrigerator to determine a desired storage condition of the food, based on the result of the measurement. Thus, it may be possible to ensure reliability of the determined storage condition.

Although a few embodiments of the present disclosure have been shown and described, it would be appreciated by those skilled in the art that changes may be made in these embodiments without departing from the principles of the invention, the scope of which is defined in the claims.

## Claims

1. A refrigerator (1) comprising:
a body (10) having a storage chamber (11) to store food;
a cooling device (18) to supply cold air to the storage chamber (11); and
an indicating device (30) comprising a measurement unit (31) to measure a state of the food, and thus to obtain data about the measured food state,
**characterized in that**
food storage condition is determined, based on the obtained food state data and food kind data
input by a user, and driving of the cooling device (18) is controlled, based on the determined food storage condition,
wherein said indicating device (30) is a portable device separate from the body (10) and a pocket (17) is provided at the body (10) to releasably hold the indicating device (30),
and the indicating device (30) includes a display unit (36) to display the food state data or the food storage condition.

2. The refrigerator according to claim 1, wherein the body (10) comprises a determination unit (27) to determine the food storage condition, based on the food state data and the food kind data, and the indicating device (30) displays the food state data.

3. The refrigerator according to claim 2, wherein the food state data obtained by the indicating device (30) is able to be manually input to the body (10).

4. The refrigerator according to claim 2, wherein the food state data obtained by the indicating device (30) is able to be transmitted to the body (10) through wired or wireless communication.

5. The refrigerator according to claim 1, wherein the indicating device (30) comprises a determination unit (34) to determine the food storage condition, based on the food state data and the food kind data, and the indicating device (30) displays the food storage condition.

6. The refrigerator according to claim 5, wherein the food storage condition determined by the indicating device (30) is able to be manually input to the body (10).

7. The refrigerator according to claim 5, wherein the food storage condition determined by the indicating device (30) is able to be transmitted to the body (10) through wired or wireless communication.

8. The refrigerator according to claim 1, wherein the food state data comprises at least one of a salinity of the food, an acidity of the food, a temperature of the food, and a number of bacteria present in the food.

9. The refrigerator according to claim 1, wherein the measurement unit (31) comprises at least one of a salinity measurer, an acidity measurer, a temperature measurer, and a bacteria number measurer, to obtain the food state data.

10. The refrigerator according to claim 1, wherein the determination unit (27, 34) comprises a memory (28, 35) in which data about various food storage conditions according to various food kinds and various food states is pre-stored.

11. The refrigerator according to claim 1, wherein:
the body (10) comprises a kind input unit (26) to receive data about a kind of the food.

12. The refrigerator according to claim 1, wherein:
the indicating device (30) comprises a kind input unit (33) to receive data about a kind of the food.

13. The refrigerator according to claim 1, wherein the food storage condition comprises a food storage temperature.

## Patentansprüche

1. Kühlschrank (1), welcher aufweist:
einen Körper (10) mit einem Speicherabteil (11) zur Speicherung von Nahrung;
eine Kühlvorrichtung (18) zur Zufuhr von kalter Luft zu dem Speicherabteil (11); und
eine Anzeigevorrichtung (30), welche eine Messeinheit (31) umfasst, um einen Zustand der Nahrung zu messen und folglich Daten über den gemessenen Nahrungszustand zu erhalten,
**dadurch gekennzeichnet, dass**
Nahrungsspeicherbedingung bestimmt wird, basierend auf den erhaltenen Nahrungszustandsdaten und Nahrungsartdaten, die durch einen Benutzer eingegeben wurden, und
ein Betreiben der Kühlvorrichtung (18) gesteuert wird, basierend auf der ermittelten Nahrungsspeicherbedingung,
wobei die Anzeigevorrichtung (30) eine tragbare Vorrichtung getrennt vom Körper (10) ist und eine Tasche (17) an dem Körper (10) zur lösbaren Halterung der Anzeigevorrichtung (30) vorgesehen ist,
wobei die Anzeigevorrichtung (30) eine Darstellungseinheit (36) zur Darstellung der Nahrungszustandsdaten oder Nahrungsspeicherbedingung umfasst.

2. Kühlschrank nach Anspruch 1, wobei der Körper (10) eine Feststellungseinheit (27) zur Feststellung der Nahrungsspeicherbedingung basierend auf den Nahrungszustandsdaten und den Nahrungsartdaten aufweist und die Anzeigevorrichtung (30) die Nahrungszustandsdaten darstellt.

3. Kühlschrank nach Anspruch 2, wobei die Nahrungszustandsdaten, die durch die Anzeigevorrichtung (30) erhalten werden, manuell in den Körper (10) eingebbar sind.

4. Kühlschrank nach Anspruch 2, wobei die Nahrungszustandsdaten, die durch die Anzeigevorrichtung (30) erhalten werden, an den Körper (10) durch Draht- oder Drahtlosverbindung übertragbar sind.

5. Kühlschrank nach Anspruch 1, wobei die Anzeigevorrichtung (30) eine Bestimmungseinheit (34) zur Bestimmung der Nahrungsspeicherbedingung basierend auf den Nahrungszustandsdaten und den Nahrungsartdaten aufweist und die Anzeigevorrichtung (30) die. Nahrungsspeicherbedingung darstellt.

6. Kühlschrank nach Anspruch 5, wobei die Nahrungsspeicherbedingung, die durch die Anzeigevorrichtung (30) bestimmt ist, manuell in den Körper (10) eingebbar ist.

7. Kühlschrank nach Anspruch 5, wobei die Nahrungsspeicherbedingung, die durch die Anzeigevorrichtung (30) bestimmt wurde, an den Körper (10) durch eine Draht- oder Drahtlosverbindung übertragbar ist.

8. Kühlschrank nach Anspruch 1, wobei die Nahrungszustandsdaten wenigstens eine der folgenden Werte umfassen, Salzgehalt der Nahrung, Säuregehalt der Nahrung, Temperatur der Nahrung, und Anzahl der in der Nahrung enthaltenen Bakterien.

9. Kühlschrank nach Anspruch 1, wobei die Messeinheit (31) zum Erhalt von Nahrungszustandsdaten wenigstens eine Messvorrichtung von den folgenden aufweist, Salzgehaltmessvorrichtung, Säuregehaltmessvorrichtung, Temperaturmessvorrichtung und Bakterienanzahlmessvorrichtung.

10. Kühlschrank nach Anspruch 1, wobei die Bestimmungseinheit (27, 34) einen Speicher (28, 35) aufweist, in welchem Daten über verschiedene Nahrungsspeicherbedingungen entsprechend zu unterschiedlichen Nahrungsarten und unterschiedlichen Nahrungszuständen abgespeichert sind.

11. Kühlschrank nach Anspruch 1, wobei der Körper (10) eine Arteingabeeinheit (26) zum Empfang von Daten über eine Art der Nahrung aufweist.

12. Kühlschrank nach Anspruch 1, wobei die Anzeigevorrichtung (30) eine Arteingabeeinheit (33) zum Empfang von Daten über eine Art der Nahrung aufweist.

13. Kühlschrank nach Anspruch 1, wobei die Nahrungsspeicherbedingung eine Nahrungsspeichertemperatur umfasst.

## Revendications

1. Réfrigérateur (1) comprenant:
un corps (10) ayant une chambre de stockage (11) pour stocker des aliments;
un dispositif de refroidissement (18) pour fournir de l'air froid à la chambre de stockage (11); et
un dispositif d'indication (30) comprenant une unité de mesure (31) pour mesurer un état de l'aliment et ainsi obtenir des données concernant l'état de l'aliment mesuré,
**caractérisé en ce que**
l'état de stockage de l'aliment est déterminé, en fonction des données d'état d'e l'aliment obtenues et des données sur la nature de l'aliment entrées par un utilisateur, et l'entraînement du dispositif de refroidissement (18) est contrôlée, en fonction de l'état de stockage de l'aliment déterminé,
dans lequel ledit dispositif d'indication (30) est un dispositif portable séparé du corps (10) et une poche (17) est prévue sur le corps (10) pour maintenir de manière libérable le dispositif d'indication (30),
et le dispositif d'indication (30) comprend une unité d'affichage (36) pour afficher les données d'état de l'aliment ou l'état de stockage de l'aliment.

2. Réfrigérateur selon la revendication 1, dans lequel le corps (10) comprend une unité de détermination (27) pour déterminer l'état de stockage de l'aliment, en fonction des données sur l'état de l'aliment et des données sur le type d'aliment, et le dispositif d'indication (30) affiche les données d'état de l'aliment.

3. Réfrigérateur selon la revendication 2, dans lequel les données d'état de l'aliment obtenues par le dispositif d'indication (30) peuvent être saisies manuellement dans le corps (10).

4. Réfrigérateur selon la revendication 2, dans lequel les données d'état de l'aliment obtenues par le dispositif d'indication (30) peuvent être transmises au corps (10) par le biais d'une communication filaire ou sans fil.

5. Réfrigérateur selon la revendication 1, dans lequel le dispositif d'indication (30) comprend une unité de détermination (34) pour déterminer l'état de stockage de l'aliment, en fonction des données sur l'état de l'aliment et des données sur le type d'aliment, et le dispositif d'indication (30) affiche les données de stockage de l'aliment.

6. Réfrigérateur selon la revendication 5, dans lequel les données de stockage de l'aliment déterminées par le dispositif d'indication (30) peuvent être saisies manuellement dans le corps (10).

7. Réfrigérateur selon la revendication 5, dans lequel les données de stockage de l'aliment obtenues par le dispositif d'indication (30) peuvent être transmises au corps (10) par le biais d'une communication filaire ou sans fil.

8. Réfrigérateur selon la revendication 1, dans lequel les données d'état de l'aliment comprennent au moins un élément parmi les suivants : salinité de la nourriture, acidité de la nourriture, température de la nourriture et nombre de bactéries présentes dans l'aliment.

9. Réfrigérateur selon la revendication 1, dans lequel l'unité de mesure (31) comprend au moins un élément parmi les suivants: appareil de mesure de salinité, appareil de mesure de l'acidité, appareil de mesure de la température et appareil de mesure du nombre de bactéries, pour obtenir les données sur l'état de l'aliment.

10. Réfrigérateur selon la revendication 1, dans lequel l'unité de détermination (27, 34) comprend une mémoire (28, 35) dans laquelle des données concernant divers états de stockage de l'aliment selon divers types d'aliment et divers états de l'aliment sont pré-stockées.

11. Réfrigérateur selon la revendication 1, dans lequel:
le corps (10) comprend une unité d'entrée de nature de l'aliment (26) pour recevoir des données concernant la nature de l'aliment.

12. Réfrigérateur selon la revendication 1, dans lequel:
le dispositif d'indication (30) comprend une unité d'entrée de nature de l'aliment (33) pour recevoir des données concernant la nature de l'aliment.

13. Réfrigérateur selon la revendication 1, dans lequel l'état de stockage de l'aliment comprend une température de stockage de l'aliment.
